# EUROPÄISCHE PATENTANMELDUNG

(11) **EP 3 594 081 A1**
(43) Veröffentlichungstag der Anmeldung: **15.01.2020**
(21) Anmeldenummer: 18182452.5
(22) Anmeldetag: 09.07.2018
(51) Int. Cl.: B61D 43/00, B61F 3/04, H02K 9/00, B61C 17/00

(54) **ANTRIEBSSYSTEM FÜR EIN SCHIENENFAHRZEUG**

(71) Anmelder: Siemens Mobility GmbH, 81739 München (DE)
(72) Erfinder: Körner, Olaf, 90469 Nürnberg (DE)

(57) **Zusammenfassung**

Vorgeschlagen wird ein Antriebssystem (1) für ein Schienenfahrzeug (2) mit wenigstens einem Antriebsmotor (7) und wenigstens einer Kühlvorrichtung (11, 18) zur Kühlung des wenigstens einen Antriebsmotors (7) und/oder anderer Komponenten des Antriebssystems (1), insbesondere eines Stromrichters (12). Das Antriebssystem (1) ist dadurch gekennzeichnet, dass es dazu ausgebildet und vorgesehen ist, eine kinetische Energie des Schienenfahrzeugs (2) zu einem Betrieb der Kühlvorrichtung (11, 18) zu verwenden.

## Beschreibung

Die Erfindung betrifft ein Antriebssystem für ein Schienenfahrzeug mit wenigstens einem Antriebsmotor und wenigstens einer Kühlvorrichtung zur Kühlung des wenigstens einen Antriebsmotors nach Anspruch 1. Außerdem betrifft die Erfindung ein Schienenfahrzeug mit einem Antriebssystem nach Anspruch 9, ein Verfahren zur Fortbewegung eines Schienenfahrzeugs nach Anspruch 12 und ein Verfahren zur Fortbewegung eines Schienenfahrzeugs nach Anspruch 13.

Bei einem Betrieb von Fahrmotoren für Schienenfahrzeuge muss eine ausreichende Kühlung sichergestellt werden. Dabei soll die Kühlung möglichst zuverlässig, unabhängig von zusätzlichen Komponenten und einfach zu bewerkstelligen sein.

Besonders wichtig ist die Kühlung bei sogenannten Wagenlokomotiven. Dabei handelt es sich um Lokomotiven, die elektrisch komplett abgeschaltet sind und bremstechnisch wie ein Waggon in einem Zug überführt werden. Werden bei den Lokomotiven permanentmagneterregte (PM) Fahrmotoren eingesetzt, die nicht vom Radsatz entkoppelbar sind, rotieren diese bei einem Einsatz der Lokomotiven als Wagenlokomotiven mit und verursachen motorinterne Verluste. Diese Verluste sind hauptsächlich Wirbelstrom- und Hystereseverluste im Ständereisen des Fahrmotors, die infolge des rotierenden Magnetfeldes auftreten.

Diese Verluste müssen sicher aus dem Fahrmotor abgeführt werden, so dass der Motor nicht überhitzt wird.

Ebenso von Bedeutung ist die Sicherstellung der Kühlung von Fahrmotoren, bei denen beispielsweise aus Bauraumgründen keine Luftkühlung mit einem Eigenlüfter auf der Fahrmotorwelle möglich ist.

Bei Triebfahrwerken, die einen Stromrichter aufweisen, muss zudem die zuverlässige Kühlung des Stromrichters und etwaiger anderer elektrischer Komponenten gewährleistet werden. Ein solches Triebfahrwerk mit einem integrierten Stromrichter ist beispielsweise in der Druckschrift DE 10 2013 225 913 A1 beschrieben.

Es ist bekannt, zur Sicherstellung der Kühlung der oben genannten Motoren beispielsweise eigenbelüftete Motoren zu verwenden. Zudem können einzelne Komponenten mittels des Fahrtwindes gekühlt werden (z.B. Stromrichter).

Eine weitere bekannte Lösung ist der Anbau eines elektrischen Lüfters oder eine Fremdbelüftung der Motoren mit wagenkastenfesten Lüftern. Ebenso bekannt ist eine Wasserkühlung von Motoren mit wagenkastenfesten Pumpen und Rückkühleinheiten.

Aus der DE 10 2010 040 491 A1 ist der Anbau eines Lüfters an das Getriebe eines Schienenfahrzeugs bekannt. Hierin ist ein elektrisch angetriebenes Fahrzeug mit einem Lüfter offenbart, der über ein Lüfterritzel mit einem Großrad des Fahrzeugantriebs gekoppelt ist, und mit einem Luftkanal, der den von dem Lüfter erzeugten Luftstrom zu mindestens einem Fahrmotor des Fahrzeugs führt.

Darüber hinaus können für den speziellen Fall der Wagenlokomotiven Asynchronmaschinen als Antrieb zum Einsatz kommen, die bei einem Transport der Wagenlokomotive keine elektromagnetischen Verluste erzeugen. Allerdings bringen Asynchronmaschinen an sich bekannte inhärente Nachteile mit sich (z.B. Verluste in den Rotoren während des normalen Betriebs), so dass eine reine Verwendung dieses Antriebssystems für Lokomotiven keine zufriedenstellende Lösung darstellt.

Der Erfindung liegt die Aufgabe zugrunde, ein Antriebssystem für ein Schienenfahrzeug bereitzustellen, das die zuvor genannten Nachteile überwindet und insbesondere autark agieren kann.

Diese Aufgabe wird gelöst durch ein Antriebssystem für ein Schienenfahrzeug nach Anspruch 1.

Zudem wird die Aufgabe gelöst durch ein Schienenfahrzeug mit einem Antriebssystem nach Anspruch 9.

Außerdem wird die Aufgabe gelöst durch ein Verfahren zur Fortbewegung eines Schienenfahrzeugs nach Anspruch 12 und durch ein Verfahren zur Fortbewegung eines Schienenfahrzeugs nach Anspruch 13.

Vorteilhafte Weiterbildungen ergeben sich aus den abhängigen Ansprüchen.

Das erfindungsgemäße Antriebssystem für ein Schienenfahrzeug mit wenigstens einem Antriebsmotor und wenigstens einer Kühlvorrichtung zur Kühlung des wenigstens einen Antriebsmotors und/oder anderer Komponenten des Antriebssystems, insbesondere eines Stromrichters, ist dadurch gekennzeichnet, dass das Antriebssystem dazu ausgebildet und vorgesehen ist, eine kinetische Energie des Schienenfahrzeugs zu einem Betrieb der Kühlvorrichtung zu verwenden.

Bei dem Schienenfahrzeug kann es sich beispielsweise um eine Lokomotive handeln, die ein Antriebssystem mit einem Antriebsmotor aufweist. Insbesondere kann es sich bei dem Schienenfahrzeug um einen Nahverkehrs- oder Regionalverkehrszug oder um eine Personen- oder Güterzuglokomotive handeln.

Das erfindungsgemäße Antriebssystem kann die kinetische Energie (Bewegungsenergie) des Schienenfahrzeugs, die dieses aufgrund einer Fortbewegung (aktiv oder passiv) aufweist, dazu nutzen, eine Kühlung des Antriebsmotors und/oder anderer Komponenten des Antriebssystems zu realisieren. Dadurch kann eine besonders einfache, zuverlässige und von anderen Energiequellen unabhängige Kühlung der genannten Komponenten vorgenommen werden.

Bei dem Antriebsmotor handelt es sich vorteilhafterweise um einen permanentmagneterregten Motor, der die zuvor genannten Nachteile eines Asynchronmotors vermeidet.

Vorzugsweise ist das das Antriebssystem dazu ausgebildet und vorgesehen ist, ausschließlich eine kinetische Energie des Schienenfahrzeugs zu einem Betrieb der Kühlvorrichtung zu verwenden.

Bevorzugt umfasst das Antriebssystem eine Energiewandlungsvorrichtung, die mit der Kühlvorrichtung verbunden ist. Dabei ist die Energiewandlungsvorrichtung dazu ausgebildet und vorgesehen, eine kinetische Energie des Schienenfahrzeugs in eine Energieform umzuwandeln, die zu einem Betrieb der Kühlvorrichtung geeignet und vorgesehen ist. Durch den Einsatz der Energiewandlungsvorrichtung lässt sich die kinetische Energie in nahezu beliebiger Weise in eine Form umwandeln, die zu einem Betrieb der Kühlvorrichtung besonders geeignet ist.

Vorteilhafterweise ist die Energiewandlungsvorrichtung ein Generator zur Erzeugung von elektrischer Energie. Durch die Erzeugung von elektrischer Energie können die Energiewandlungsvorrichtung und die Kühlvorrichtung nahezu unabhängig voneinander an verschiedenen Anbauorten innerhalb des Schienenfahrzeugs angeordnet werden.

Eine weitere Ausgestaltungsmöglichkeit der Energiewandlungsvorrichtung besteht in einer Ausbildung als hydraulische Pumpe, die zur Erzeugung eines Hydraulikkreislaufs ausgebildet und vorgesehen ist.

Besonders bevorzugt erfolgt der Einbau der Energiewandlungsvorrichtung (Generator, hydraulische Pumpe oder eine vergleichbare Vorrichtung) an einer Antriebswelle und/oder einer Getriebewelle des Antriebssystems. Alternativ oder zusätzlich dazu kann die Energiewandlungsvorrichtung auch an einer Radsatzwelle des Schienenfahrzeugs angeordnet sein.

Die Kühlvorrichtung kann eine Belüftungsvorrichtung und/oder eine Fluidkühlungsvorrichtung umfassen. Bei der Belüftungsvorrichtung kann es sich um einen an sich bekannten Lüfter handeln. Die Fluidkühlungsvorrichtung kann eine Wasserpumpe zum Herstellen eines Wasserkreislaufs zur Abführung von Wärme aus dem Antriebssystem umfassen.

Die Aufgabe wird auch gelöst von einem Schienenfahrzeug, das ein zuvor beschriebenes Antriebssystem aufweist. Bei diesem Schienenfahrzeug, das bevorzugt eine Lokomotive ist, ist die Kühlvorrichtung vorzugsweise an einem Fahrwerk und/oder einem Wagenkasten des Schienenfahrzeugs angeordnet. Aufgrund der Verwendung des zuvor beschriebenen Antriebssystems ist ein Einbauort der Kühlvorrichtung innerhalb des Schienenfahrzeugs nahezu beliebig wählbar. Zudem kann die Kühlvorrichtung unabhängig von einer Drehzahl des Antriebsmotors und/oder eines Radsatzes des Schienenfahrzeugs betrieben werden.

Im Zuge eines erfindungsgemäßen Verfahrens zur Fortbewegung eines zuvor beschriebenen (ersten) Schienenfahrzeugs wird der wenigstens eine Antriebsmotor des Schienenfahrzeugs mittels der wenigstens einen Kühlvorrichtung gekühlt.

Im Zuge eines weiteren erfindungsgemäßen Verfahrens wird das erste Schienenfahrzeug mit wenigstens einem zweiten Schienenfahrzeug, das ein Antriebssystem aufweist, verbunden. Beide miteinander verbundenen Schienenfahrzeuge werden anschließend mittels einer Zugkraft des Antriebssystems des zweiten Schienenfahrzeugs fortbewegt. Dabei wird der wenigstens eine Antriebsmotor mittels der wenigstens einen Kühlvorrichtung gekühlt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigen:
- FIG 1: ein Antriebssystem eines erfindungsgemäßen Schienenfahrzeugs mit einer Belüftungsvorrichtung;
- FIG 2: ein Antriebssystem eines erfindungsgemäßen Schienenfahrzeugs mit einer Fluidkühlungsvorrichtung; und
- FIG 3: eine Anordnung einer Lokomotive als Wagenlokomotive.

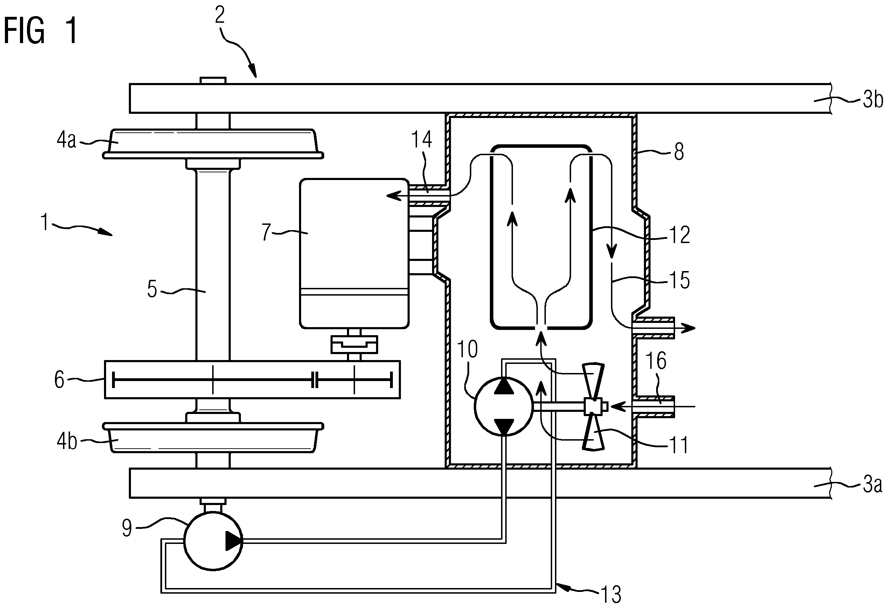

FIG 1 zeigt ein Antriebssystem 1 eines erfindungsgemäßen Schienenfahrzeugs 2. Das Schienenfahrzeug 2 stellt in dieser Figur eine Lokomotive dar. Deren Fahrwerk ist mittels zweiter Längsträger 3a, 3b, eines Mittenträgers 8 und zweier Räder 4a, 4b angedeutet dargestellt. FIG 1 zeigt eine Draufsicht auf das Antriebssystem 1 des Schienenfahrzeugs 2. Üblicherweise weist ein Schienenfahrzeug 2 mehrere (gleichartige oder verschiedene) Antriebssysteme 1 auf, wie es in FIG 1 dargestellt ist, auf deren Darstellung aus Übersichtlichkeitsgründen jedoch verzichtet wurde.

Das in FIG 1 dargestellte Antriebssystem 1 umfasst eine Radsatzwelle 5, ein Getriebe 6 und einen Motor 7. Der Motor 7 treibt in an sich bekannter Weise mittels des Getriebes 6 die Radsatzwelle 5 an, die wiederum die Räder 4a, 4b in Bewegung setzt.

Das erfindungsgemäße Schienenfahrzeug 2 umfasst außerdem eine Hydraulikpumpe 9, einen Hydraulikmotor 10, einen Lüfter 11 und einen Stromrichter 12 auf. Die Hydraulikpumpe 9 ist mit der Radsatzwelle 5 derart mechanisch verbunden, dass eine Drehbewegung der Radsatzwelle 5 dazu genutzt wird, einen Hydraulikkreislauf 13 zu schaffen. Mittels dieses Hydraulikkreislaufes 13 wird der Hydraulikmotor 10 angetrieben, welcher wiederum mit dem Lüfter 11 derart mechanisch verbunden ist, dass der Hydraulikmotor 10 den Lüfter 11 in Rotation versetzt.

Der Lüfter 11 ist innerhalb des Mittenträgers 8 angeordnet, welcher ein Gehäuse 8 mit innen hohlen Zwischenräumen bildet. Innerhalb dieses Gehäuses 8 ist auch der Stromrichter 12 angeordnet. Der Mittenträger 8 weist eine erste Öffnung 14 auf, durch die Luft aus dem Inneren des Gehäuses auf bzw. in den Motor 7 strömen kann. Darüber hinaus weist der Mittenträger 8 eine zweite Öffnung 16 auf, durch die Luft aus der Umgebung in das Innere des Gehäuses 8 gesaugt werden kann.

Durch die erzwungene Bewegung des Lüfters 11 entsteht ein Luftstrom 15 innerhalb des Mittenträgers. Dabei wird Luft durch die zweite Öffnung 16 in das Innere des Gehäuses 8 gesaugt und durch den Lüfter 11 zuerst auf den Stromrichter 12 und dann durch die erste Öffnung 14 auf den Motor 7 gelenkt. Ohne den Rahmen der Erfindung zu verlassen, kann die Luft auch in getrennten Strömungskanälen zu Stromrichter 12 und Motor 7 gelenkt werden.

Insgesamt betrachtet wandelt das Antriebssystem 1 des Schienenfahrzeugs 2 die Bewegungsenergie (kinetische Energie), die aus der Fortbewegung des Schienenfahrzeugs 2 resultiert, zunächst in eine hydraulische Energie und anschließend in eine Rotationsenergie des Lüfters 11 um, der als Kühlvorrichtung zur Kühlung des (Antriebs-)Motors 7 verwendet wird. Zudem kann der Stromrichter 12 als weitere Komponente des Antriebssystems 1 bzw. des Schienenfahrzeugs 2 mittels des Lüfters 11 gekühlt werden.

Dabei wird im vorliegenden Ausführungsbeispiel ausschließlich die die kinetische Energie des Schienenfahrzeugs 2 zur Kühlung genutzt.

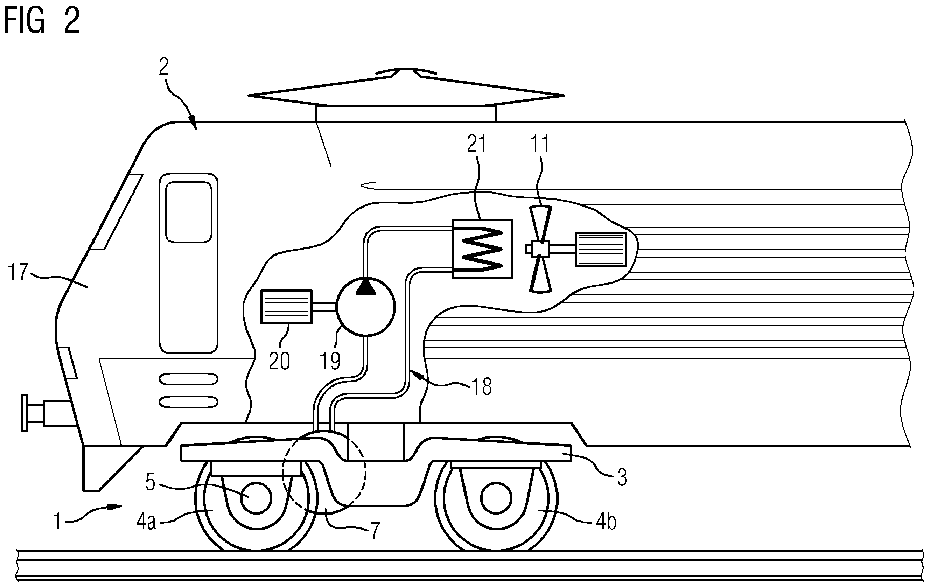

FIG 2 zeigt ein weiteres Antriebssystem 1 eines erfindungsgemäßen Schienenfahrzeugs 2. Das Schienenfahrzeug 2 stellt eine Lokomotive dar und ist in FIG 2 mittels eines Fahrwerk-Längsträgers 3 und eines Oberaufbaus 17 (Lokkastens) sowie zweier Räder 4a, 4b angedeutet dargestellt.

Das Antriebssystem 1 treibt mittels eines Antriebsmotors 5, der insbesondere ein permanentmagneterregter Motor 5 sein kann, und eines nicht dargestellten Getriebes eine Radsatzwelle 5 an. Der Antriebsmotor 5 ist mit einer Fluidkühlungsvorrichtung bzw. einem Fluidkühlungssystem 18 verbunden.

Das Fluidkühlungssystem 18 umfasst eine Fluidpumpe 19, die mittels eines Motors 20 betrieben wird. Die Fluidpumpe 19 führt Fluid durch den Antriebsmotor 7, wo in an sich bekannter Weise eine Aufheizung des Fluids durch Verlustwärme des Antriebsmotors 7 erfolgt. Das erhitzte Fluid wird einem Wärmetauscher bzw. Rückkühler 21 zugeführt. Dort wird die abgegebene Wärme des Fluids unter Zuhilfenahme eines Lüfters 11 abgeführt. Anschließend wird das gekühlte Fluid wieder dem Antriebsmotor 7 zugeführt.

Der Motor 20 der Fluidpumpe 19 und der Lüfter 11 werden mittels eines (nicht dargestellten) Generators mit elektrischer Energie versorgt. Der Generator wiederum nutzt die Rotationsenergie der Radsatzwelle 5 zur Erzeugung der elektrischen Energie. Es ist ebenso möglich, einen zuvor bereits erläuterten Hydraulikkreislauf 13 zum Antrieb des Motors 20 und des Lüfters 11 einzusetzen.

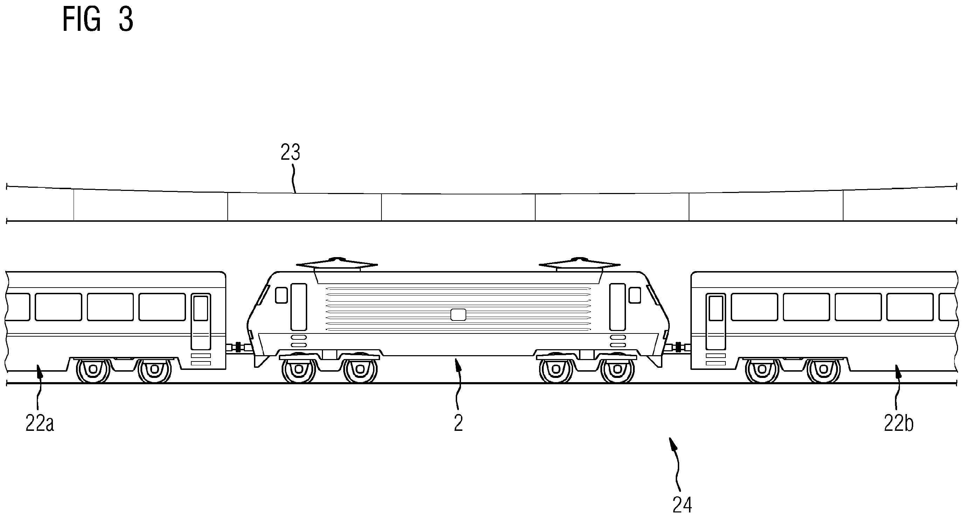

FIG 3 zeigt einen Anwendungsfall für ein erfindungsgemäßes Antriebssystem 1. In FIG 3 ist eine Lokomotive 2 dargestellt, die als sogenannte Wagenlokomotive 2 fungiert. Dabei handelt es sich um eine Lokomotive 2, die elektrisch komplett abgeschaltet ist (es besteht keine Verbindung zu einer Oberspannungsleitung 23) und bremstechnisch wie ein Waggon in einem Zug 24 überführt wird. Die Lokomotive 2 ist mit einem ersten Waggon 22a und einem zweiten Waggon 22b verbunden, die wiederum Teil einer größeren Waggonkette sein können.

Wird bei der Lokomotive 2 ein oder mehrere permanentmagneterregte (PM) Fahrmotoren eingesetzt, die nicht vom Radsatz der Lokomotive 2 entkoppelbar sind, rotieren diese bei einem Einsatz der Lokomotive 2 als Wagenlokomotive mit und verursachen motorinterne Verluste. Diese Verluste sind hauptsächlich Wirbelstrom- und Hystereseverluste im Ständereisen des Fahrmotors, die infolge des rotierenden Magnetfeldes auftreten.

Besonders vorteilhaft kann bei dieser Konstellation ein erfindungsgemäßes Antriebssystem 1 zum Einsatz kommen, sodass eine einfache und effiziente Kühlung der Fahrmotoren gewährleistet werden kann.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Antriebssystem (1) für ein Schienenfahrzeug (2) mit wenigstens einem Antriebsmotor (7) und wenigstens einer Kühlvorrichtung (11, 18) zur Kühlung des wenigstens einen Antriebsmotors (7) und/oder anderer Komponenten des Antriebssystems (1), insbesondere eines Stromrichters (12),
**dadurch gekennzeichnet, dass**
das Antriebssystem (1) dazu ausgebildet und vorgesehen ist, eine kinetische Energie des Schienenfahrzeugs (2) zu einem Betrieb der Kühlvorrichtung (11, 18) zu verwenden.

2. Antriebssystem (1) nach Anspruch 1, das dazu ausgebildet und vorgesehen ist, ausschließlich eine kinetische Energie des Schienenfahrzeugs (2) zu einem Betrieb der Kühlvorrichtung (11, 18) zu verwenden.

3. Antriebssystem (1) nach Anspruch 1 oder 2, das eine Energiewandlungsvorrichtung (9, 10) umfasst, die mit der Kühlvorrichtung (11, 18) verbunden ist, wobei die Energiewandlungsvorrichtung (9, 10) dazu ausgebildet und vorgesehen ist, eine kinetische Energie des Schienenfahrzeugs (2) in eine Energieform umzuwandeln, die zu einem Betrieb der Kühlvorrichtung (11, 18) geeignet und vorgesehen ist.

4. Antriebssystem (1) nach Anspruch 3, bei dem die Energiewandlungsvorrichtung (11, 18) ein Generator zur Erzeugung von elektrischer Energie ist.

5. Antriebssystem (1) nach Anspruch 3, bei dem die Energiewandlungsvorrichtung (11, 18) eine hydraulische Pumpe (9) zur Erzeugung eines Hydraulikkreislaufs (13) ist.

6. Antriebssystem (1) nach einem der Ansprüche 3 bis 5, bei dem die Energiewandlungsvorrichtung (11, 18) an einer Antriebswelle (5) und/oder einer Getriebewelle und/oder einer Radsatzwelle des Antriebssystems (1) angeordnet ist.

7. Antriebssystem (1) nach einem der vorangegangenen Ansprüche, bei dem die Kühlvorrichtung (11, 18) eine Belüftungsvorrichtung (11) und/oder eine Fluidkühlungsvorrichtung (18) umfasst.

8. Antriebssystem (1) nach einem der vorangegangenen Ansprüche, bei dem der Antriebsmotor (7) ein permanentmagneterregter Motor ist.

9. Schienenfahrzeug (2) mit einem Antriebssystem (1) nach einem der vorangegangenen Ansprüche.

10. Schienenfahrzeug (2) nach Anspruch 9, bei dem die Kühlvorrichtung (11, 18) an einem Fahrwerk (3a, 3b, 3) und/oder einem Wagenkasten des Schienenfahrzeugs (2) angeordnet ist.

11. Schienenfahrzeug (2) nach Anspruch 9 oder 10, das eine Lokomotive ist.

12. Verfahren zur Fortbewegung eines ersten Schienenfahrzeugs (2) gemäß einem der Ansprüche 9 bis 11, wobei der wenigstens eine Antriebsmotor (1) des Schienenfahrzeugs (2) mittels der wenigstens einen Kühlvorrichtung (11, 18) gekühlt wird.

13. Verfahren zur Fortbewegung eines ersten Schienenfahrzeugs (2) gemäß einem der Ansprüche 9 bis 11, umfassend:
- Verbinden des Schienenfahrzeugs (2) mit wenigstens einem zweiten Schienenfahrzeug (2), das ein Antriebssystem (1) aufweist;
- Fortbewegung der miteinander verbundenen Schienenfahrzeuge (2) mittels einer Zugkraft des Antriebssystems (1) des zweiten Schienenfahrzeugs (2);
- Kühlung des wenigstens einen Antriebsmotors (7) mittels der wenigstens einen Kühlvorrichtung (11, 18).
